(19) Europäisches Patentamt
European Patent Office
Office européen des brevets

(11) EP 0 816 434 A1

(12) EUROPÄISCHE PATENTANMELDUNG

(43) Veröffentlichungstag:
**07.01.1998 Patentblatt 1998/02**

(21) Anmeldenummer: **97110590.3**

(22) Anmeldetag: **27.06.1997**

(51) Int. Cl.[6]: **C08L 69/00**, C08K 5/523
// (C08L69/00, 55:02, 51:04, 25:02)

(84) Benannte Vertragsstaaten:
**AT BE CH DE DK ES FI FR GB GR IE IT LI LU MC NL PT SE**

(30) Priorität: **28.06.1996 DE 19626156**

(71) Anmelder:
**BASF AKTIENGESELLSCHAFT**
**67056 Ludwigshafen (DE)**

(72) Erfinder:
- **Weber, Martin, Dr.**
**67487 Maikammer (DE)**
- **Massonne, Klemens, Dr.**
**67368 Westheim (DE)**

(74) Vertreter:
**Kinzebach, Werner, Dr. et al**
**Patentanwälte**
**Reitstötter, Kinzebach und Partner**
**Postfach 86 06 49**
**81633 München (DE)**

# (54) Flammwidrige, thermoplastische Formmassen

(57) Die Erfindung betrifft halogenfreie, flammwidrige, thermoplastische Formmassen, enthaltend

A) mindestens ein halogenfreies aromatisches Polycarbonat
B) mindestens ein halogenfreies, kautschukelastisches Pfropfpolymerisat,
C) mindestens ein halogenfreies thermoplastisches, vinylaromatisches Copolymerisat,
die dadurch gekennzeichnet sind, daß sie
D) als Flammschutzmittel eine Schwefelverbindung der Formel I

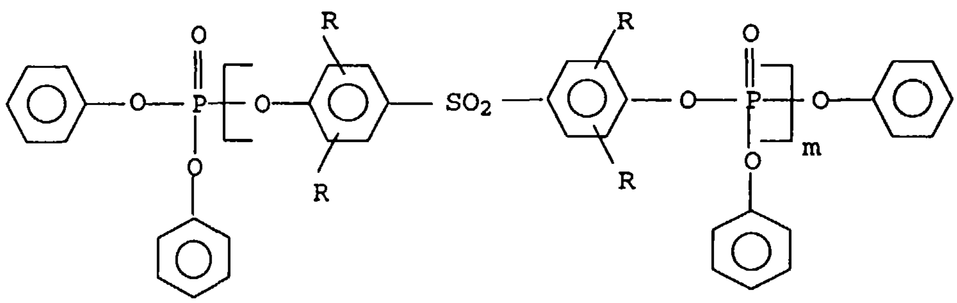

(I)

umfassen, worin
die Reste R unabhängig voneinander für ein Wasserstoffatom oder eine Alkylgruppe stehen und

m einen mittleren Wert von 1 bis 5 besitzt

sowie deren Verwendung zur Herstellung von flammwidrigen Formkörpern, Fasern und Folien und die unter Verwendung dieser Formmassen erhältlichen Produkte.

EP 0 816 434 A1

**Beschreibung**

Die vorliegende Erfindung betrifft thermoplastische Formmassen auf Basis von Polycarbonaten und Styrolcopolymeren mit verbessertem Eigenschaftsprofil, deren Verwendung zur Herstellung von Formkörpern, Fasern und Filmen sowie die unter Verwendung dieser Formmassen hergestellten Produkte.

Polymerblends aus Polycarbonat und Styrolcopolymeren, wie beispielsweise ABS (Acrylnitril-Butadien-Styrol-Polymerisate), ASA (Acrylnitril-Styrol-Acrylat-Polymerisate) oder AES (Acrylnitril-Ethylen(copolymere)-Styrol-Polymerisate), zeichnen sich durch hervorragende mechanische Eigenschaften aus (siehe z.B.: "Technische Polymer-Blends", Kunststoff Handbuch 3/2, L. Bottenbruch (Hrsg.) Hanser Verlag München 1993). Daher finden diese Formmassen in den verschiedensten Bereichen Verwendung, beispielsweise im Automobilbau, im Bausektor, für Büromaschinen sowie in elektrischen Geräten und Haushaltsgeräten.

Des weiteren können diese Polymerblends durch Zusatz halogenfreier Flammschutzmittel flammwidrig ausgerüstet werden, so daß die Anforderungen der Brandprüfung nach UL-94 erfüllt werden. Besonders geeignete Flammschutzmittel sind phosphororganische Verbindungen, wie beispielsweise Phosphorester oder Phosphinoxide. Mit diesen Flammschutzmitteln ausgerüstete Formmassen sind aus vielen Patentanmeldungen, wie z.B. den EP-A-0 103 230, 0 174 493, 0 206 058, 0 363 608 und 0 558 266 bekannt.

Obwohl halogenfreie flammwidrige PC/ABS-Blends für sehr viele Anwendungen geeignet sind, stellen die zum Erreichen der Flammwidrigkeit notwendigen Mengen an Flammschutzmittel ein Problem dar. Da phosphorhaltige Flammschutzmittel auch als Weichmacher wirken, reduzieren sie die Wärmeformbeständigkeit thermoplastischer Formmassen erheblich.

Aus der Literatur war die Verwendung von verzweigten Polyphosphaten bekannt, die neben Phosphor auch Schwefelbrücken in der Kette enthalten. Die durch Mischen dieser Verbindungen mit Polycarbonat und Pfropfkautschuken erhaltenen Formmassen weisen gute Flammwidrigkeit auf, die Fließfähigkeit ist jedoch nicht zufriedenstellend.

Gegenstand der DE-A-40 07 730 sind flammwidrige Polyalkylenterephthalat-Formmassen, die neben Polyester und hochtemperaturbeständigen Thermoplasten Polyphosphonsäureester enthalten. Als mögliche Brückengruppe zwischen den Phosphorresten ist auch die $SO_2$-Gruppe genannt, ohne jedoch durch Beispiele belegt zu sein.

Aromatische Diphosphate als Flammschutzmittel für Thermoplaste sind auch Gegenstand der EP-A-0 509 506. Diese Flammschutzmittel basieren jedoch auf aromatischen Phosphatgruppen mit spezifischem Substituentenmuster. Als mögliche Brückengruppe zwischen den Phosphatresten wird die $SO_2$-Gruppe genannt. Diese ist jedoch weder bevorzugt noch ist deren Einfluß auf die Flammschutzwirkung durch Ausführungsbeispiele belegt.

Die EP 522 397 beschreibt Formmassen auf Basis von Polycarbonat, Styrolcopolymeren, Polyestern und phosphororganischen Flammschutzmitteln, die zusätzlich ein Polyaramid als Antitropfmittel enthalten. Die phosphororganischen Verbindungen können linear oder cyclisch aufgebaut sein. Die linear gebauten phosphororganischen Flammschutzmittel können z.B. folgende Formel besitzen

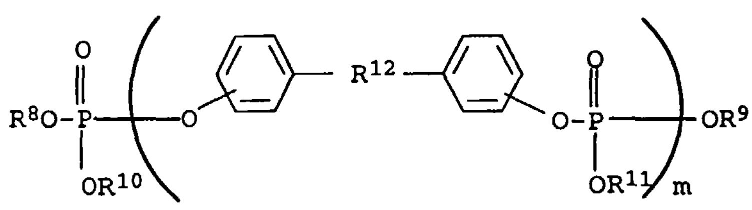

wobei jedoch $R^8$, $R^9$, $R^{10}$ und $R^{11}$ substituierte Arylreste bedeuten. $R^{12}$ kann beispielsweise für eine $SO_2$-Gruppe stehen. Konkrete Beispiele für derartige Flammschutzmittel werden jedoch nicht genannt. Die in dieser Schrift aufgeführten Versuche zeigen keinen Unterschied bezüglich der Flammschutzwirkung zwischen Triphenylphosphat und einem dimeren Phosphat auf Basis von 4,4'-Dihydroxidiphenylmethan.

Als Flammschutzmittel für thermisch stark beanspruchte Thermoplaste wird in der WO 94/03535 ein dimerer Phosphorester auf Basis von Bisphenol A empfohlen. Die endständigen Estergruppen werden dabei von substituierten Phenylresten gebildet.

Weiterhin war aus der EP-A-0 640 655 bekannt, daß flammwidrige Formmassen mit verbesserter Spannungsrißbeständigkeit auf Basis von Polycarbonat und Styrolcopolymeren erhalten werden können, wenn eine Flammschutzmittelmischung aus monomerem und dimerem Phosphat eingesetzt wird. $SO_2$-verbrückte dimere Phosphate werden darin jedoch nicht als Flammschutzmittel vorgeschlagen.

All diese, aus dem Stand der Technik bekannten Formmassen weisen jedoch noch kein zufriedenstellendes Eigenschaftsprofil auf.

Der Erfindung lag daher die Aufgabe zugrunde, flammgeschützte Blends aus Polycarbonat und schlagzähmodifizierten Styrolcopolymeren mit verbessertem Eigenschaftsprofil bereitzustellen.

Es wurde nun gefunden, daß Formmassen auf Basis von Polycarbonat und schlagzähmodifizierten Styrolcopolymeren mit einem Flammschutzmittel der Formel I

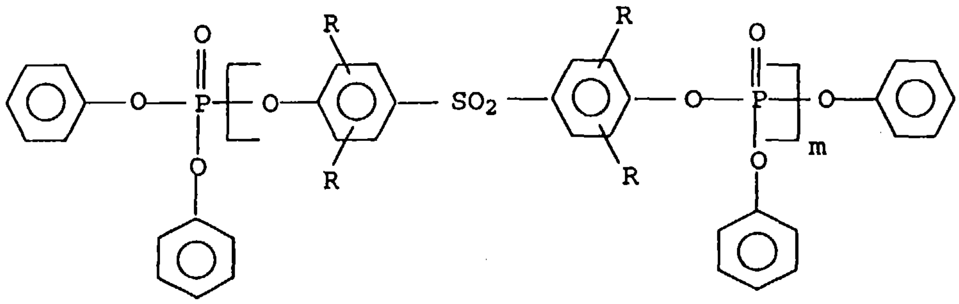

(I)

wobei die Reste R unabhängig voneinander für ein Wasserstoffatom oder eine Alkylgruppe, vorzugsweise $C_1$-$C_8$-Alkylgruppe, stehen und m eine Zahl von 1 bis 5 sein kann (Mittelwert), ein verbessertes Eigenschaftsprofil aufweisen. Vorzugsweise besitzen die Reste R in den Verbindungen der allgemeinen Formel I die gleiche Bedeutung und stehen jeweils für ein Wasserstoffatom oder eine $C_1$-$C_8$-Alkylgruppe. Gemäß einer weiteren bevorzugten Ausführungsform befinden sich die Reste R in ortho-Stellung zum Ester-Sauerstoff. Vorzugsweise besitzt m einen Mittelwert im Bereich von 1 bis 3 oder 1 bis 2.

In einer weiteren Ausführungsform der Erfindung kann das Flammschutzmittel der Formel I auch mit einem oder mehreren Flammschutzmitteln der folgenden allgemeinen Formel II kombiniert werden

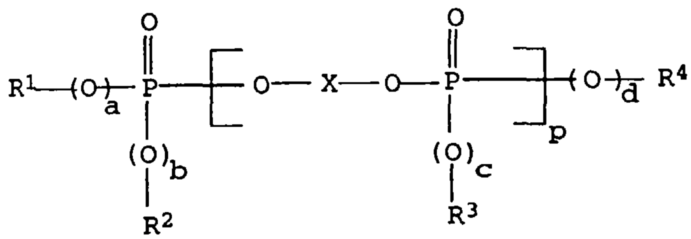

(II)

wobei $R^1$, $R^2$, $R^3$ und $R^4$ unabhängig voneinander $C_1$-$C_8$-Alkyl, $C_3$-$C_{10}$-Cycloalkyl, $C_6$-$C_{10}$-Aryl oder $C_7$-$C_{16}$-Aralkyl bedeuten, a, b, c und d unabhängig voneinander für 0 oder 1 stehen, p für eine mittlere Zahl von 1 bis 5 steht, und X einen ein- oder mehrkernigen aromatischen Rest mit 6 bis 30 C-Atomen bedeutet. Vorzugsweise verwendet man solche Verbindungen der allgemeinen Formel II, worin $R^1$, $R^2$, $R^3$ und $R^4$ jeweils die gleiche Bedeutung besitzen. Vorzugsweise besitzen a, b, c und d den Wert 1 und p besitzt vorzugsweise einen mittleren Wert im Bereich von 1 bis 3. X ist vorzugsweise ausgewählt unter einer meta- oder para-Phenylengruppe.

Erfindungsgemäß bevorzugt verwendet man als Verbindung der Formel I und II die entsprechenden Handelsprodukte. Diese können auch Mischungen verschiedener Oligomere und/oder Isomere darstellen. Solche Gemische sind im Rahmen der vorliegenden Erfindung ebenfalls anwendbar.

Gegenstand der Erfindung sind vorzugsweise flammwidrige, thermoplastische Formmassen, enthaltend jeweils, bezogen auf das Gesamtgewicht der Formmasse,

A) 1 bis 97,5 Gew.-% mindestens eines halogenfreien aromatischen Polycarbonats
B) 1 bis 97,5 Gew.-% mindestens eines halogenfreien Pfropfpolymerisats,
C) 1 bis 97,5 Gew.-% mindestens eines halogenfreien thermoplastischen Styrolcopolymerisats,
$D_1$) 0,5 bis 20 Gew.-% einer halogenfreien $SO_2$-Gruppen enthaltenden Phosphorverbindung der Formel I,
$D_2$) 0 bis 15 Gew.-% einer halogenfreien Phosphorverbindung der Formel II,
E) 0 bis 10 Gew.-% eines Antitropfmittels, und
F) 0 bis 50 Gew.-% weiterer Zusatzstoffe.

Gemäß einer bevorzugten Ausführungsform werden Formmassen, enthaltend

A) 1 bis 97,4 Gew.-% mindestens eines halogenfreien aromatischen Polycarbonats,

B) 1 bis 97,4 Gew.-% mindestens eines Pfropfpolymerisats, aufgebaut aus

$b_1$) 40 bis 80 Gew.-% einer Pfropfgrundlage aus einem kautschukelastischen Polymer mit einer Glastemperatur von unter 10°C;
$b_2$) 20 bis 60 Gew.-% einer Pfropfauflage aus

$b_{21}$) 50 bis 95 Gew.-% mindestens eines Styrols der allgemeinen Formel III

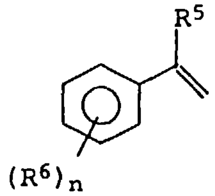

(III)

wobei

$R^5$ für einen $C_1$-$C_8$-Alkylrest oder ein Wasserstoffatom steht und $R^6$ für einen $C_1$-$C_8$-Alkylrest steht und
n für 0, 1, 2 oder 3 steht;
oder Methylmethacrylat oder deren Mischungen,

$b_{22}$) 5 bis 50 Gew.-% Acrylnitril, Methacrylnitril, Methylmethacrylat, Maleinsäureanhydrid, Maleinimiden oder deren Mischungen.;

C) 1 bis 97,4 Gew.-% eines thermoplastischen Styrolcopolymerisats aus

$c_1$) 50 bis 95 Gew.-% mindestens eines Styrols der allgemeinen Formel III oder Methylmethacrylat oder deren Mischungen,
$c_2$) 5 bis 50 Gew.-% Acrylnitril, Methacrylnitril, Maleinsäureanhydrid, Maleinimiden oder deren Mischungen,

$D_1$) 0,5 bis 20 Gew.-% mindestens einer halogenfreien, $SO_2$-Gruppen enthaltenden Phosphorverbindung der Formel I,
$D_2$) 0 bis 15 Gew.-% mindestens einer halogenfreien Phosphorverbindung der Formel II
E) 0,1 bis 10 Gew.-% mindestens eines Antitropfmittels,
F) 0 bis 50 Gew.-% mindestens eines weiteren Zusatzstoffes.

Eine weitere bevorzugte Ausführungsform betrifft Formmassen des obenbezeichneten Typs, worin als Flammschutzmittel D, bezogen auf das Gesamtgewicht der Komponente D

5 bis 95 Gew.-% $D_1$ und
5 bis 95 Gew.-% $D_2$

enthalten sind.

Bevorzugte Komponenten D sind beispielsweise: das Reaktions produkt der Umsetzung von 4,4'-Dihydroxydiphenylsulfon mit Triphenylphosphat oder Diphenylchlorphosphat; sowie Resorcinoldiphenylphosphat und Hydrochinondiphenylphosphat.

Unter $C_1$-$C_8$-Alkylgruppen versteht man im Rahmen der vorliegenden Erfindung lineare oder verzweigte Alkylgruppen. Beispiele sind $C_1$-$C_6$-Alkylgruppen, wie Methyl, Ethyl, n-Propyl, i-Propyl, n-Butyl, 2-Butyl, i-Butyl, t-Butyl, n-Hexyl sowie 2-Ethylhexyl, n-Heptyl und n-Octyl. Beispiele für $C_3$-$C_{10}$-Cycloalkylgruppen sind Cyclopropyl, Cyclobutyl, Cyclopentyl, Methylcyclopentyl, Cyclohexyl sowie Methyl-, Dimethyl- und Trimethylcyclohexyl. $C_5$-$C_6$-Cycloalkylgruppen sind bevorzugt. Unter $C_6$-$C_{10}$-Arylgruppen versteht man insbesondere Phenyl- oder Naphthylgruppen. Beispiele für $C_7$-$C_{16}$-Aralkylgruppen umfassen Phenyl-$C_1$-$C_6$-alkyl und Naphthyl-$C_1$-$C_6$-alkyl, worin der $C_1$-$C_6$-Alkylteil wie oben definiert ist. Gegebenenfalls können die erfindungsgemäßen Aryl- oder Aralkylgruppen einen oder mehrere Substituenten am aromatischen Ring tragen. Geeignete Substituenten sind z.B. $C_1$-$C_6$-Alkyl und Hydroxyl.

Beispiele für ein- oder mehrkernige Reste X mit 6 bis 30 Kohlenstoffatomen sind

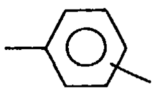 , 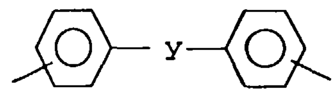 , 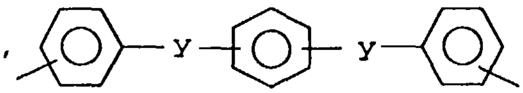

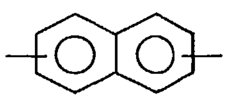 , 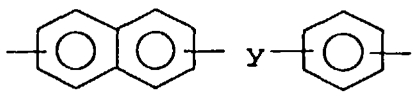 ,

wobei Y für $C_1$-$C_6$-Alkylen, C=O, -O- oder N=N stehen kann, wobei jeder aromatische Ring durch ein, zwei oder drei $C_1$-$C_6$-Alkylgruppen substituiert sein kann. Beispiele für $C_1$-$C_6$-Alkylengruppen sind Methylen, Ethylen, Propylen, Butylen, Pentylen und Hexylen.

Als Komponente A enthalten die erfindungsgemäßen Formmassen etwa 1 bis 97,4, vorzugsweise etwa 5 bis 88,9 und insbesondere etwa 10 bis 78,4 Gew.-% mindestens eines Polycarbonats.

Geeignete halogenfreie Polycarbonate sind beispielsweise solche auf Basis von Diphenolen der allgemeinen Formel IV

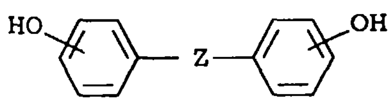 (IV)

worin Z eine Einfachbindung, eine $C_1$-$C_6$-Alkylen-, eine $C_2$-$C_6$-Alkyliden-, eine $C_3$-$C_{12}$-Cycloalkylidengruppe sowie -S- oder $SO_2$- bedeutet.

Beispiele für $C_1$-$C_6$-Alkylengruppen sind Methylen, Ethylen, Propylen, 1,1-Dimethylethylen, 1,3-Dimethylpropylen, 2-Methylbutylen und 2,3-Dimethylbutylen.

Beispiele für $C_2$-$C_6$-Alkylidengruppen sind Ethyliden und 1,1- und 2,2-Propyliden.

Beispiele für $C_3$-$C_{12}$-Cycloalkylidengruppen sind Cyclopentyliden, Cyclohexyliden und 3,3,5-Trimethylcyclohexyliden.

Bevorzugte Diphenole der Formel IV sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyhenyl)-propan und 1,1-Bis-(4-öhydroxyphenyl)-cyclohexan sowie 1,1-Bis-(4-hydroxyphenyl)-3,3,5-trimethylcyclohexan.

Sowohl Homopolycarbonate als auch Copolycarbonate sind als Komponente A) geeignet, bevorzugt sind neben den Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten Mw (Gewichtsmittelwert) von 10 000 bis 200 000, vorzugsweise von 20 000 bis 80 000.

Die Diphenole der allgemeinen Formel IV sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pydridinverfahren) erfolgen, wobei das jeweils einzustellende Molekulargewicht in bekannter Weise durch eine entsprechende Menge an bekannten Kettenabbrechern erzielt wird.

Geeignete Kettenabbrecher sind beispielsweise Phenol, p-tert.-Butylphenol, aber auch langkettige Alkylphenole, wie 4-(1,3-Tetramethyl-butyl)-phenol gemäß DE-OS 28 42 005, oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung. Halogenfrei im Sinne der Erfindung bedeutet also, daß kein Halogen, insbesondere kein Chlor oder Brom in kovalent oder ionisch gebundener Form in den Komponenten enthalten ist. Entsprechendes gilt für die halogenfreien Komponenten B, C und D.

Als Komponente B enthalten die erfindungsgemäßen Formmassen etwa 1 bis 97,4, vorzugsweise etwa 5 bis 88,9, insbesondere etwa 6 bis 50 Gew.-% mindestens eines halogenfreien Pfropfcopolymerisats. Das halogenfreie Pfropfpolymerisat ist vorzugsweise aufgebaut aus

$b_1$) etwa 40 bis 80 Gew.-%, vorzugsweise etwa 50 bis 70 Gew.-% einer Pfropfgrundlage aus einem kautschukelastischen Polymeren mit einer Glasübergangstemperatur von unter 0°C,

$b_2$) etwa 20 bis 60 Gew.-%, vorzugsweise etwa 30 bis 50 Gew.-% einer Pfropfauflage aus

$b_{21}$) etwa 50 bis 95 Gew.-%, bevorzugt etwa 60 bis 80 Gew.-% Styrol oder substituierten Styrolen obiger allgemeiner Formel III oder Methylmethacrylat oder deren Mischungen

$b_{22}$) etwa 5 bis 50 Gew.-%, vorzugsweise etwa 20 bis 40 Gew.-% Acrylnitril, Methacrylnitril, Methylmethacrylat, Maleinsäureanhydrid oder deren Mischungen.

Für die Pfropfgrundlage $b_1$) kommen Polymerisate in Frage, deren Glasübergangstemperatur unterhalb von 10°C, insbesondere unterhalb von 0°C vorzugsweise unterhalb von -20°C liegt. Dies sind z.B. Naturkautschuk, Synthesekautschuk auf der Basis von konjugierten Dienen, ggf. mit anderen Copolymeren sowie Elastomere auf der Basis von $C_1$-$C_8$-Alkylestern der Acrylsäure, die ggf. ebenfalls weitere Comonomere enthalten können.

Bevorzugt kommen als Pfropfgrundlage $b_1$) Polybutadien (vgl. DE-A-14 20 775 und DE-A-14 95 089) und Copolymerisate aus Polybutadien und Styrol (vgl. GB-A-649 166) in Betracht.

Weiterhin sind Pfropfgrundlagen $b_1$) bevorzugt, die aufgebaut sind aus

$b_{11}$) 70 bis 99,9 Gew.-%, vorzugsweise 99 Gew.-% mindestens eines Alkylacrylats mit 1 bis 8 C-Atomen im Alkylrest, vorzugsweise n-Butylacrylat und/oder 2-Ethylhexylacrylat, insbesondere n-Butylacrylat als alleiniges Alkylacrylat

$b_{12}$) 0 bis 30 Gew.-%, insbesondere 20 bis 30 Gew.-% eines weiteren copolymerisierbaren, monoethylenisch ungesättigten Monomers, wie Butadien, Isopren, Styrol, Acrylnitril, Methylmethacrylat und/oder Vinylmethylether

$b_{13}$) 0,1 bis 5 Gew.-%, vorzugsweise 1 bis 4 Gew.-% eines copolymersierbaren, polyfunktionellen, vorzugsweise bi- oder trifunktionellen, die Vernetzung bewirkenden Monomers.
Als solche bi- oder polyfunktionellen Vernetzungsmonomeren $b_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A-12 60 135).

Auch diese Art von Pfropfgrundlagen ist an sich bekannt und in der Literatur beschrieben, beispielsweise in der DE-A-31 49 358.

Von den Pfropfauflagen $b_2$) sind diejenigen bevorzugt, in denen b21) Styrol oder $\alpha$-Methylstyrol bedeutet. Als bevorzugte Monomeren-Gemische werden vor allem Styrol und Acrylnitril, $\alpha$-Methylstyrol und Acrylnitril, Styrol, Acrylnitril und Methylmethacrylat, Styrol und Maleinsäureanhydrid eingesetzt. Die Propfauflagen sind erhältlich durch Copolymerisation der Komponenten $b_{21}$) und $b_{22}$).

Für den Fall, daß das Pfropfpolymerisat B) eine Pfropfgrundlage $b_1$) enthält, die aus Polybutadienpolymeren aufgebaut ist, so spricht man von ABS-Kautschuk.

Die Pfropfmischpolymerisation kann, wie z.B. aus der DE-A 31 49 358 bekannt, in Lösung, Suspension oder vorzugsweise in Emulsion erfolgen. Die Weichphase des Pfropfmischpolymerisats weist bei der bevorzugten Herstellung des ABS-Kautschuks und der Pfropfung in Emulsion einen mittleren Teilchendurchmesser ($d_{50}$-Wert der integralen Masseverteilung) von 0,08 $\mu$m auf. Durch Vergrößerung der Teilchen, z.B. durch Agglomerisation oder bei der Gewinnung der Emulsion im Wege des Saatlatex-Verfahrens, wird der $d_{50}$-Wert im Bereich von 0,2 bis 0,5 $\mu$m eingestellt. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft, also durch kovalente Bindungen an den Kautschuk-Fadenmolekülen gebunden.

Die Pfropfung kann auch mehrstufig erfolgen, indem zuerst ein Teil der die Pfropfhülle bildenden Monomere aufgepfropft wird und anschliessend der Rest.

Ist die Pfropfgrundlage $b_1$) der Pfropfpolymerisate B) aus den Komponenten $b_{11}$), gegebenenfalls $b_{12}$) und $b_{13}$) aufgebaut, so spricht man von ASA-Kautschuken. Ihre Herstellung ist an sich bekannt und beispielsweise in der DE-A-28 26 925, der DE-A-31 49 358 und der DE-A-34 14 118 beschrieben.

Die Herstellung des Pfropfpolymerisats B kann beispielsweise nach der in der DE-PS 12 60 135 beschriebenen Methode erfolgen.

Der Aufbau der Pfropfauflage (Pfropfhülle) des Pfropfmischpolymerisats kann ein- oder zweistufig erfolgen.

Im Falle des einstufigen Aufbaues der Pfropfhülle wird ein Gemisch der Monomeren $b_{21}$) und $b_{22}$) in dem gewünschten Gew.-Verhältnis im Bereich von 95:5 bis 50:50, vorzugsweise 90:10 bis 65:35 in Gegenwart des Elastomeren $b_1$, in an sich bekannter Weise (vgl. z.B. DE-A-28 26 925), vorzugsweise in Emulsion, polymerisiert.

Im Falle eines zweistufigen Aufbaus der Pfropfhülle $b_2$) macht die 1. Stufe im allgemeinen 20 bis 70 Gew.-%, vorzugsweise 25 bis 50 Gew.-%, bezogen auf $b_2$), aus. Zu ihrer Herstellung werden vorzugsweise nur monoethylenisch ungesättigte aromatische Kohlenwasserstoffe ($b_{21}$) verwendet.

Die 2. Stufe der Pfropfhülle macht im allgemeinen 30 bis 80 Gew.-%, insbesondere 50 bis 75 Gew.-%, jeweils bezogen auf $b_2$), aus. Zu ihrer Herstellung werden Mischungen aus den genannten monoethylenisch ungesättigten aromatischen Kohlenwasserstoffen $b_{21}$) und monoethylenisch ungesättigten Monomeren $b_{22}$) im Gewichtsverhältnis $b_{21}$)/$b_{22}$) von im allgemeinen 90:10 bis 60:40, insbesondere 80:20 bis 70:30 angewendet.

Die Bedingungen der Pfropfmischpolymerisation werden vorzugsweise so gewählt, daß Teilchengrößen von 50 bis 700 nm ($d_{50}$-Wert der integralen Massenverteilung) resultieren. Maßnahmen hierzu sind bekannt und z.B. in der DE-A-28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfmischpolymerisate mit unterschiedlicher Teilchengröße zu verwenden.

Um dies zu erreichen, werden die Teilchen des Kautschuks in bekannter Weise, z.B. durch Agglomeration vergrößert, so daß der Latex bimodal (50 bis 180 nm und 200 bis 700 nm) aufgebaut ist.

In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfmischpolymerisate ist vorzugsweise derselbe, obwohl die Hülle des grobteiligen Pfropfmischpolymerisats insbesondere auch zweistufig aufgebaut werden kann.

Mischungen aus der Komponente A und B, wobei letzere ein grob- und ein feinteiliges Pfropfmischpolymerisat aufweist, sind z.B. in der DE-A-36 15 607 beschrieben. Mischungen aus der Komponente A und B, wobei letztere eine zweistufige Pfropfhülle aufweist, sind aus der EP-A-111 260 bekannt.

Als Komponente C enthalten die erfindungsgemäßen Formmassen etwa 1 bis 97,4, vorzugsweise etwa 5 bis 88,9 und insbesondere etwa 10 bis 60 Gew.-% eines halogenfreien thermoplastischen Copolymerisats. Das halogenfreie, thermoplastische Copolymerisat ist vorzugsweise aufgebaut aus

$c_1$) etwa 50 bis 95 Gew.-%, vorzugsweise etwa 60 bis 80 Gew.-% Styrol oder substituierten Styrolen der allgemeinen Formel III oder Methylmethacrylat oder deren Mischungen

$c_2$) etwa 5 bis 50 Gew.-%, vorzugsweise etwa 20 bis 40 Gew.-% Acrylnitril, Methacrylnitril, Methylmethacrylat, Maleinsäureanhydrid oder deren Mischungen.

Die Copolymerisate C) sind harzartig, thermoplastisch und kautschukfrei. Besonders bevorzugte Copolymerisate C) sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden.

Solche Copolymerisate entstehen häufig bei der Pfropfpolymerisation zur Herstellung der Komponente B) als Nebenprodukte, besonders dann, wenn große Mengen Monomere auf kleine Mengen Kautschuk gepfropft werden.

Die Copolymerisate C) sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von etwa 40 bis 160 auf, dies entspricht mittleren Molekulargewichten $\overline{M}_w$ (Gewichtsmittelwert) von etwa 40 000 bis 2 000 000.

Als Komponente $D_1$ enthalten die erfindungsgemäßen thermoplastischen Formmassen etwa 0,5 bis 20, vorzugsweise etwa 1 bis 17,5 und insbesondere etwa 1,5 bis 15 Gew.-% eines Flammschutzmittels der Formel I, worin R und m wie oben definiert sind.

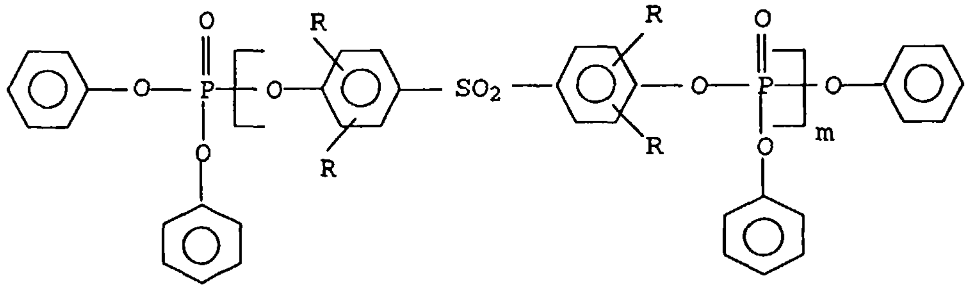

(I)

Die Komponente $D_1$ kann durch Umsetzung eines von 4,4'-Dihydroxydiphenylsulfons mit Halogendiphenylphosphat erhalten werden, das gewünschte Produkt füllt dabei als weiße kristalline Substanz an.

Eine weitere Methode zur Synthese von Verbindungen der Formel I besteht darin, 4,4'-Dihydroxydiphenylsulfon mit Triphenylphosphat unter Basenkatalyse umzusetzen. Über das Verhältnis der Komponenten kann die Oligomerenverteilung geregelt werden. Die Verbindungen der Formel I können als Reinsubstanz oder, bevorzugt, in Form des bei ihrer Herstellung anfallenden Oligomer-Gemischs eingesetzt werden. Um die Viskosität der entstehenden Öle niedrig zu halten, werden Produkte mit einem Mittelwert für m von 1,1 bis 4,9 bevorzugt hergestellt. Weitere Details zur Reaktionsführung sind dem Fachmann bekannt.

Als Komponente $D_2$ können alle bekannten phosphorhaltigen Flammschutzmittel mit mindestens zwei Phosphoratomen (Zahlenmittel) verwendet werden. Besonders bevorzugt sind Resorcinoldiphenylphosphat bzw. entsprechende höhere Oligomere und Hydrochinondiphenylphosphat bzw. entsprechende höhere Oligomere, insbesondere Verbindungen der Formel II. Der Anteil der halogenfreien phosphorhaltigen Flammschutzmittel der Formel II an den erfindungsgemäßen thermoplastischen Formmassen beträgt 0 bis etwa 15, vorzugsweise 0 bis etwa 12,5 und insbesondere 0 bis etwa 10 Gew.-%.

Als Antitropfmittel (Komponente E) ist Teflon verwendbar. Außerdem ist als Antitropfmittel wenigstens ein halogenfreies, thermoplastisches Copolymerisat brauchbar, aufgebaut aus

$e_1$) 50 bis 95 Gew.-%, bevorzugt 60 bis 80 Gew.-% vinylaromatischer Verbindungen der allgemeinen Formel III oder deren Mischungen,

$e_2$) 5 bis 50 Gew.-%, bevorzugt 20 bis 40 Gew.-% Acrylnitril, Methacrylnitril, Methylmethacrylat oder deren Mischungen, und

$e_3$) 0 bis 30 Gew.-%, bevorzugt 0 bis 10 Gew.-% monoethylenisch ungesättigter Monomerer mit mindestens einer polaren funktionellen Gruppe.

Bevorzugte Beispiele geeigneter vinylaromatischer Monomerer $e_1$ sind Styrol oder $\alpha$-Methylstyrol, insbesondere Styrol.

Als Monomere $e_3$ mit polaren funktionellen Gruppen kommen beispielsweise solche mit Hydroxy-, Säure-, Anhydrid-, Imidazol-, Pyrrolidon- oder Aminogruppen in Betracht. Acrylsäure, Methacrylsäure, Vinylphenol, Maleinsäureanhydrid, Glycidylmethacrylat, Hydroxyethylacrylat, Vinylimidazol, Vinylpyrrolidon oder Dimethylaminoethylacrylat sind Beispiele geeigneter Monomerer $e_3$. Darunter werden Glycidylmethacrylat oder Hydroxyethylacrylat besonders bevorzugt. Selbstverständlich können auch Mischungen unterschiedlicher Monomerer $e_3$ eingesetzt werden.

Erfindungsgemäß weisen die Copolymerisate E mittlere Molekulargewichts Mw (Gewichtsmittelwert) von mindestens 800 000 g/mol auf. Im allgemeinen liegen die mittleren Molekulargewichte im Bereich von 830 000 bis 1 500 000, insbesondere von 850 000 bis 1 200 000 g/mol.

Erfindungsgemäß haben die Copolymerisate E eine breite Molmassenverteilung, d.h. das Verhältnis von Gewichtsmittel- zu Zahlenmittelwert der Molmassen $M_w/M_n$ ist groß. Bevorzugt beträgt das Verhältnis $M_w/M_n$ 2 oder mehr. Besonders bevorzugt ist $M_w/M_n$ 2,5 oder mehr, beispielsweise mehr als 3.

Copolymerisate E sind an sich bekannt oder können nach an sich bekannten Methoden hergestellt werden. Im allgemeinen lassen sie sich durch radikalische Polymerisation, bevorzugt in Lösung oder Emulsion herstellen.

Der Anteil von Komponente E beträgt, bezogen auf das Gesamtgewicht der Formmasse, 0 bis etwa 10 Gew.-%, vorzugsweise etwa 0,1 bis etwa 10 Gew.-%.

Als Komponente F können die erfindungsgemäßen thermoplastischen Formmassen bis zu 50 Gew.-%, insbesondere bis 45 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren, wie UV-Stabilisatoren, Schmiermittel, Phosphorstabilisatoren und Antistatika werden üblicherweise in Mengen von 0 bis 5 Gew.-% verwendet, Verstärkungsmittel, wie Kohlenstoffasern und Glasfasern hingegen in Mengen von 0 bis 40 Gew.-%.

Bevorzugt als Komponente F sind Kohlenstoffasern und insbesondere Glasfasern.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10mm, vorzugsweise 3 bis 6 mm eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagstoffe, die elektromagnetische Wellen abschirmen, genannt. Insbesondere kommen Al-Flocken (K 102 der Fa. Transmet) für EMI-Zwecke (electro-magnetic interference) in Betracht; ferner Abmischungen dieser Masse mit zusätzlichen Kohlenstoffasern, Leitfähigkeitsruß oder nickelbeschichteten C-Fasern.

Die erfindungsgemäßen Formmassen können ferner weitere Zusatzstoffe enthalten, die für Polycarbonate, SAN-Polymerisate und Pfropfmischpolymerisate auf Basis von ASA oder ABS oder deren Mischungen typisch und gebräuchlich sind. Als solche Zusatzstoffe seien beispielsweise genannt: Farbstoffe, Pigmente, Antistatika, Antioxidanzien und insbesondere die Schmiermittel, die für die Weiterverarbeitung der Formmasse, z.B. bei der Herstellung von Formkörpern bzw. Formteilen erforderlich sind.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A) bis E) und die Zusätze der Gruppe F) sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A), B), C), D), E) und gegebenenfalls F) kann nach allen bekannten Methoden erfolgen. Vorzugsweise geschieht jedoch das Mischen der Komponenten A), B), C), D), E) und gegebenenfalls F) bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wässrigen Dispersion isoliert worden sind.

Die erfindungsgemäßen thermoplastischen Formmassen können nach den bekannten Verfahren der Thermoplastverarbeitung bearbeitet werden, also z.B. durch Extrindieren, Spritzgießen, Kalandrieren, Hohlkörperblasen, Pressen oder Sintern.

Die folgenden Beispiele dienen der weiteren Erläuterung der Erfindung, ohne diese jedoch auf die konkreten Ausführungsformen der Beispiele zu beschränken.

BEISPIELE

1. Bestimmung der Teilchengröße und Teilchengrößenverteilung

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z und Z-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Messenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind.

Der Quotient

$$\frac{d_{90} - d_{10}}{d_{50}} = Q$$

stellt ein Maß für die Verteilungsbreite der Teilchengröße dar.

2. Verwendete Komponenten:

A: Ein handelsübliches Polycarbonat auf der Basis von Bisphenol A mit einer Viskositätszahl (VZ) von 61,3 ml/g, gemessen an einer 0,5 gew.-%igen Lösung in Methylenchlorid bei 23°C.

$B_1$: Ein feinteiliges Pfropfmischpolymerisat, hergestellt aus

$\beta_1$: 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 min nach dem Anspringen der Polymerisationsreaktion wurde innerhalb von 3 Stunden eine Mischung aus 82 g Butylacrylat und 1,6 g Tricyclodecenylacrylat zugegeben. Nach Beendigung der Monomerzugabe wurde noch eine Stunde grührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).

$\beta_2$: 150 g des nach $\beta_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.

$B_2$: Ein grobteiliges Pfropfmischpolymerisat, das folgendermaßen hergestellt wurde:

$\beta_3$) Zu einer Vorlage aus 1,5 g des nach $\beta_1$) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$-$C_{18}$-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).

$\beta_4$) 150 g des nach $\beta_3$) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

$B_3$: Ein Pfropfmischpolymerisat, hergestellt durch Polymerisation von 60 g Butadien in Gegenwart einer Lösung von 0,6 g tert.-Dodecylmercaptan, 0,7 g Na-$C_{14}$-Alkylsulfonat als Emulgator, 0,2 g Kaliumperoxodisulfat und 0,2 g Natriumpyrophosphat in 80 g Wasser bei 65°C. Nach Beendigung der Reaktion wurde der Polymerisationsautoklav entspannt. Der Umsatz betrug 98 %.
Es wurde ein Polybutadienlatex erhalten, dessen mittlere Teilchengröße bei 0,1 µm lag. Dieser wurde durch Zusatz von 25 g einer Emulsion aus einem Copolymeren aus 96 g Ethylacrylat und 4 g Methacrylsäureamid mit einem Feststoffgehalt von 10 Gewichtsteilen agglomeriert, wobei ein Polybutadienlatex mit einer mittleren Teilchengröße von 0,35 µm entstand. Nach dem Zusatz von 40 g Wasser, 0,4 g Na-$C_{14}$-Alkylsulfonat und 0,2 Teilen Kaliumperoxodisulfat wurden 40 g einer Mischung aus Styrol und Acrylnitril im Gewichtsverhältnis von 70:30 innerhalb von 4 Stunden zugeführt. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

$C_1$: Copolymerisat aus Styrol/Acrylnitril 75/25, VZ = 82 ml/g (0,5 % in DMF, 23°C)

$C_2$: Ein Copolymerisat aus Styrol und Acrylnitril im Gew.-Verhältnis 80:20 mit einer Viskositätszahl von 83 ml/g (gemessen an einer 0,5 gew.-%igen Lösung in Dimethylformamid bei 23°C), hergestellt durch kontinuierliche Lösungspolymerisation nach einem Verfahren, wie es beispielsweise im Kunststoff-Handbuch, Vieweg-Daumiller, Band V (Polystyrol), Carl-Hanser-Verlag, München 1969, Seite 124, Zeilen 12ff. beschrieben ist.

$D_1$: Addukt aus 4,4'-Dihydroxydiphenylsulfon und Diphenylchlorphosphat, hergestellt nach folgendem Reaktionsschema (Verfahren (a)):

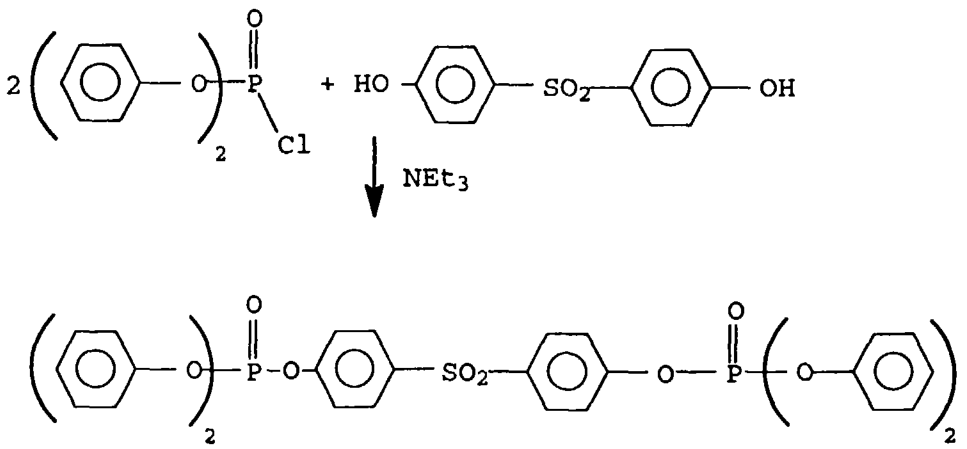


125,3 g (0,5 mol) Bisphenol S und 139 ml (1,0 mol) Triethylamin werden bei 5°C in 1300 ml Diethylether vorgelegt. 207 ml (1,0 mol) Diphenylchlorphosphat werden bei 4 bis 6°C innerhalb von 2 Stunden zugetropft. Es wird 2 Stunden bei Raumtemperatur nachgerührt. Das Triethylaminhydrochlorid wird abgetrennt und mit Methylenchlorid gewaschen. Das Lösungsmittel wird vom Filtrat abgetrennt und der Rückstand wird im Vakuum getrocknet. Man erhält 282,5 g (80 %) gelbliches Öl, das beim Stehen kristallisiert (Schmelzpunkt: 93 bis 94°C)

$D_{1,2}$:Produkt aus 4,4'-Dihydroxydiphenylsulfon und Triphenylphosphat, hergestellt nach folgendem Reaktionsschema (Verfahren

(b)):

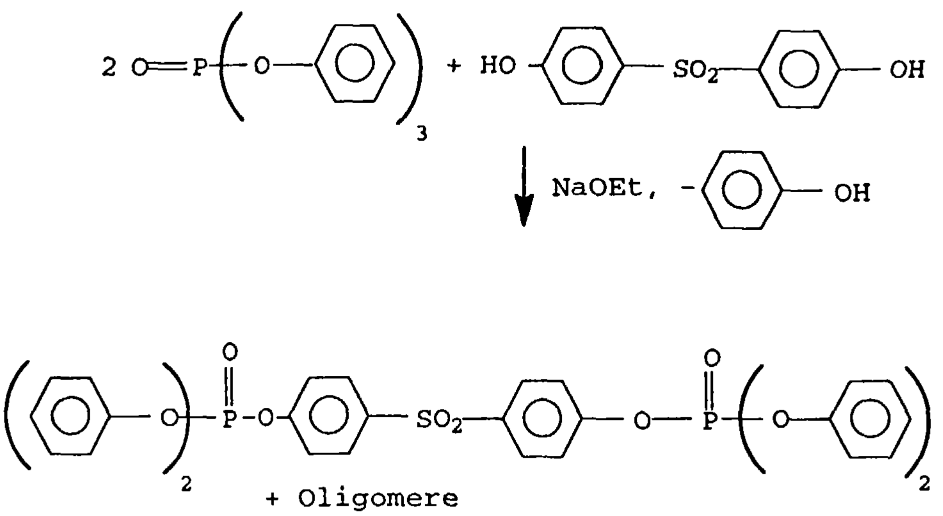


Es werden 326,3 g (1,0 mol) Triphenylphosphat und 125,1 g (0,5 mol) Bisphenol S vorgelegt. Es wird auf 50°C erwärmt, wobei eine homogene Schmelze entsteht. 0,5 g Natriummethylat werden zugefügt und das Gemisch auf

100°C erwärmt und 3 Stunden bei dieser Temperatur gerührt. Phenol wird im Vakuum abdestilliert. Als Sumpf verbleiben 340 g (ca. 95 % der Theorie) eines hochviskosen, gelben Öles.

| Elementaranalyse: | | | | | |
|---|---|---|---|---|---|
| | C | H | P | O | S |
| gef. | 60,4 | 4,1 | 8,6 | 22,6 | 4,5 % |
| Atomverh. | 36 | 29 | 2 | 10 | 1 |

Die Elementaranalyse entspricht dem monomeren Produkt nach Verfahren (a). Nach HPLC sind daneben geringe Mengen Triphenylphosphat sowie höhermolekulare Kondensationsprodukte mit längerer Retentionszeit enthalten.

$D_2$: Resorcinoldiphenylphosphat, z.B. Fyrolflex RDP®, Fa. Akzo.
$D_3$: Triphenylphosphat, z.B. Disflamol®, Fa. Bayer.
$D_4$: Produkt aus Triphenylphosphat und Bisphenol A, z.B. CR 741 S, Fa. Daihachi Chemicals
$D_5$: Produkt aus Trixylylphosphat und 4,4'-Dihydroxydiphenylsulfon, Herstellung wie unter $D_{1,2}$ beschrieben. Farblose, hochviskose Flüssigkeit, P-Anteil: 7,3 Gew.-%.
$E_1$: Teflon-Dispersion 30N, Fa. DuPont.
$F_1$: Hochmolekularer Mehrkomponentenester mit einer Viskosität von 100 bis 150 mPa*s bei 80°C (Loxiol® G 70S der Fa. Henkel).

Unter Verwendung der obigen Komponenten wurden die Formmassen 1 bis 6 sowie zu Vergleichszwecken die Formmassen V1 bis V4 in der in Tabelle 1 angegebenen Zusammensetzung hergestellt und getestet.

Die Komponenten A) bis F) wurden dazu auf einem Zweiwellenextruder (ZSK 30 der Fa. Werner & Pfleiderer) bei 250 bis 280°C gemischt, als Strang ausgetragen, gekühlt und granuliert.

Das getrocknete Granulat wurde bei 250 bis 280°C zu Rundscheiben, Normkleinstäben, ISO-Prüfkörpern sowie Flachstäben für die UL-94 Prüfung verarbeitet.

Die Wärmeformbeständigkeit der Proben wurde mittels der Vicat-Erweichungstemperatur ermittelt. Die Vicat-Erweichungstemperatur wurde nach DIN 53 460 mit einer Kraft von 49,05 N und einer Temperatursteigerung von 50 K je Stunde an Normkleinstäben ermittelt.

Die Fließfähigkeit der Formmassen wurde nach DIN 53 735 bei einer Temperatur von 260°C und 5 kg Belastung bestimmt.

Zur Prüfung der Spannungsrißbeständigkeit wurden Zugstäbe mit Tributylphosphat benetzt und die Zeit bis zum Eintreten der Rißbildung bestimmt (Randfaserdehnung 1,63 %).

Die Prüfung der Flammwidrigkeit erfolgte im vertikalen Brandtest nach den Vorschriften der Underwriter Laboratories (UL 94). Die Prüfung wurde an jeweils 5 Proben der Abmessungen 127 mm x 12,7 mm x 1,7 mm durchgeführt.

Die Einteilung in die entsprechenden Brandklassen erfolgte gemäß UL-94 nach folgenden Kriterien:

| Brandklasse | Brennzeit [s] | Gesamtbrennzeit [s] | Brennendes Abtropfen |
|---|---|---|---|
| V-0 | ≤ 10 | ≤ 50 | nein |
| V-1 | ≤ 30 | ≤ 250 | nein |
| V-2 | ≤ 30 | ≤ 250 | ja, mit Entzünden der Watte |
| V-- | keine Zuordnung zu den obigen Klassen möglich | | |

Jeder Probekörper wurde je zweimal einer offenen Flamme ausgesetzt, bei allen Proben wurde die Nachbrenndauer bei jeder Beflammung gemessen. Als Gesamtbrandzeit ($t_{ges}$) wurde die Summe der Nachbrenndauer dieser insgesamt 10 Beflammungen bezeichnet.

Zur Charakterisierung der Flammschutzmittelemission wurden isotherme TGA-Messungen bei 250°C durchgeführt. Aus den erhaltenen Meßkurven wurde der prozentuale Massenverlust nach 20 Minuten ermittelt.

Die Zusammensetzungen und Eigenschaften der thermoplastischen Formmassen sind Tabelle 1 zu entnehmen.

Tabelle 1

| Formmasse Nr. | V1 | 1 | 2 | V2 | V3 | 3 | 4 | 5 | V4 | 6 |
|---|---|---|---|---|---|---|---|---|---|---|
| | | | | | | | | | | |
| Komponente [Gew.-%] | | | | | | | | | | |
| A | 64,3 | 64,3 | 64,3 | 64,3 | 64,3 | 64,3 | 64,3 | 64,3 | 64,3 | 64,3 |
| $B_1$ | 8 | 8 | 8 | 8 | 8 | 8 | 8 | 4 | 8 | - |
| $B_2$ | - | - | - | - | - | - | - | 4 | - | - |
| $B_3$ | - | - | - | - | - | - | - | - | - | 8 |
| $C_1$ | 16 | 16 | 16 | 16 | 16 | 16 | 16 | 16 | 16 | - |
| $C_2$ | - | - | - | - | - | - | - | - | - | 16 |
| | | | | | | | | | | |
| $D_1$ | - | 11 | - | - | - | 8 | 6 | - | 8 | - |
| $D_{1,2}$ | - | - | 11 | - | - | - | - | 11 | - | 11 |
| $D_2$ | - | - | - | - | - | 3 | 5 | - | - | - |
| $D_3$ | 11 | - | - | - | - | - | - | - | - | - |
| $D_4$ | - | - | - | 11 | - | - | - | - | - | - |
| $D_5$ | - | - | - | - | 11 | - | - | - | - | - |
| $E_1$ | 0,4 | 0,4 | 0,4 | 0,4 | 0,4 | 0,4 | 0,4 | 0,4 | 0,4 | 0,4 |
| $F_1$ | 0,3 | 0,3 | 0,3 | 0,3 | 0,3 | 0,3 | 0,3 | 0,3 | 0,3 | 0,3 |
| | | | | | | | | | | |
| Vicat B [°C] | 90 | 103 | 102 | 104 | 103 | 103 | 102 | 103 | 101 | 103 |
| MVI [ml/10'] | 39 | 27 | 29 | 25 | 22 | 28 | 30 | 28 | 31 | 25 |
| Masseverlust [%] | 2,4 | 0,2 | 0,3 | 0,4 | 0,4 | 0,2 | 0,3 | 0,3 | 0,9 | 0,3 |
| $^{t}$Riß [s] | 160 | 240 | 235 | 220 | 230 | 250 | 245 | 250 | 170 | 250 |
| UL 94 | V-0 | V-0 | V-0 | V-1 | V-1 | V-0 | V-0 | V-0 | V-0 | V-0 |
| $t_{ges}$[s] | 46 | 33 | 35 | 78 | 56 | 39 | 41 | 36 | 45 | 39 |

Wie aus Tabelle 1 ersichtlich, zeichnen sich die erfindungsgemäßen thermoplastischen Formmassen durch hohe Wärmeformbeständigkeit, kurze Brandzeiten, geringe Flammschutzmittelemision und gute Spannungsrißbeständigkeit aus.

## Patentansprüche

**1.** Flammwidrige, thermoplastische Formmasse, enthaltend

A) mindestens ein halogenfreies aromatisches Polycarbonat
B) mindestens ein halogenfreies, kautschukelastisches Pfropfpolymerisat,
C) mindestens ein halogenfreies thermoplastisches, vinylaromatisches Copolymerisat,
dadurch gekennzeichnet, daß sie
D) als Flammschutzmittel eine Schwefelverbindung der Formel I

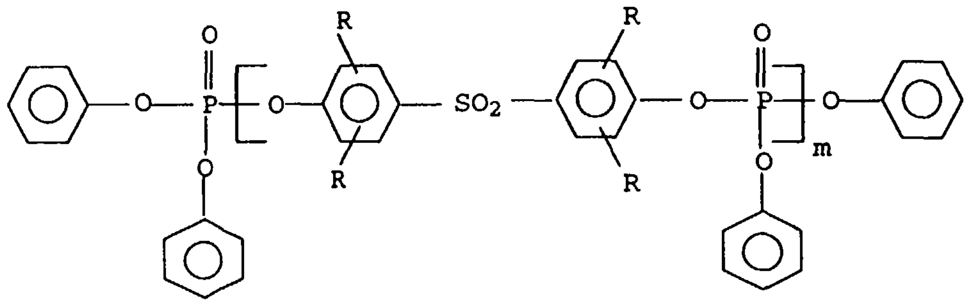

(I)

umfasst, worin
die Reste R unabhängig voneinander für ein Wasserstoffatom oder eine Alkylgruppe stehen und

m einen mittleren Wert von 1 bis 5 besitzt.

2. Formmasse nach Anspruch 1, dadurch gekennzeichnet, daß sie als weiteres Flammschutzmittel mindestens eine Verbindung der Formel II

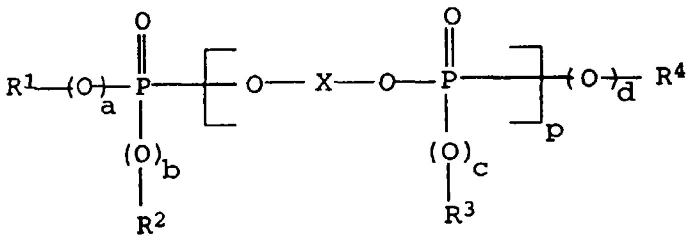

(II)

enthält, worin

$R^1$, $R^2$, $R^3$ und $R^4$ unabhängig voneinander für einen Alkyl-, Cycloalkyl-, Aryl- oder Arylalkylrest stehen,
X für einen ein- oder mehrkernigen aromatischen Rest steht,
p einen mittleren Wert von 1 bis 5 besitzt, und
a, b, c und d unabhängig voneinander für 0 oder 1 stehen.

3. Formmasse nach Anspruch 1 oder 2, enthaltend jeweils, bezogen auf das Gesamtgewicht der Formmasse,

A) 1 bis 97,5 Gew.-% mindestens eines halogenfreien aromatischen Polycarbonats
B) 1 bis 97,5 Gew.-% mindestens eines halogenfreien Pfropfpolymerisats,
C) 1 bis 97,5 Gew.-% mindestens eines halogenfreien thermoplastischen Styrolcopolymerisats,
$D_1$) 0,5 bis 20 Gew.-% einer halogenfreien $SO_2$-Gruppen enthaltenden Phosphorverbindung der Formel I,
$D_2$) 0 bis 15 Gew.-% einer halogenfreien Phosphorverbindung der Formel II,
E) 0 bis 10 Gew.-% eines Antitropfmittels, und
F) 0 bis 50 Gew.-% weiterer Zusatzstoffe.

4. Formmasse nach Anspruch 3, enthaltend

A) 1 bis 97,4 Gew.-% mindestens eines halogenfreien aromatischen Polycarbonats,
B) 1 bis 97,4 Gew.-% mindestens Pfropfpolymerisats, aufgebaut aus

$b_1$) 40 bis 80 Gew.-% einer Pfropfgrundlage aus einem kautschukelastischen Polymer mit einer Glastemperatur von unter 10°C;

$b_2$) 20 bis 60 Gew.-% einer Pfropfauflage aus

$b_{21}$) 50 bis 95 Gew.-% mindestens eines Styrols der allgemeinen Formel III

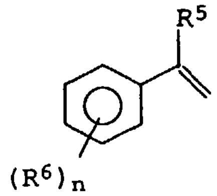

(III)

wobei

$R^5$ für einen $C_1$-$C_8$-Alkylrest oder ein Wasserstoffatom steht und $R^6$ für einen $C_1$-$C_8$-Alkylrest steht und
n für 0, 1, 2 oder 3 steht;
oder Methylmethacrylat oder deren Mischungen,

$b_{22}$) 5 bis 50 Gew.-% Acrylnitril, Methacrylnitril, Methylmethacrylat, Maleinsäureanhydrid, Maleinimiden oder deren Mischungen;

C) 1 bis 97,4 Gew.-% eines thermoplastischen Styrolcopolymerisats aus

$c_1$) 50 bis 95 Gew.-% mindestens eines Styrols der allgemeinen Formel III oder Methylmethacrylat oder deren Mischungen,
$c_2$) 5 bis 50 Gew.-% Acrylnitril, Methacrylnitril, Maleinsäureanhydrid, Maleinimiden oder deren Mischungen,

$D_1$) 0,5 bis 20 Gew.-% mindestens einer halogenfreien, $SO_2$-Gruppen enthaltenden Phosphorverbindung der Formel I,
$D_2$) 0 bis 15 Gew.-% mindestens einer halogenfreien Phosphorverbindung der Formel II
E) 0,1 bis 10 Gew.-% mindestens eines Antitropfmittels,
F) 0 bis 50 Gew.-% mindestens eines weiteren Zusatzstoffes.

**5.** Formmasse nach Anspruch 4, dadurch gekennzeichnet, daß sie als Flammschutzmittel (Komponente D), bezogen auf das Gesamtgewicht der Komponente D

5 bis 95 Gew.-% $D_1$ und
5 bis 95 Gew.-% $D_2$

enthält.

**6.** Formmasse nach Anspruch 5, dadurch gekennzeichnet, daß sie als Komponente $D_1$ das Reaktionsprodukt der Umsetzung von 4,4'-Dihydroxydiphenylsulfon mit Triphenylphosphat oder Diphenylchlorphosphat enthält.

**7.** Formmasse nach Anspruch 5, dadurch gekennzeichnet, daß sie als Komponente $D_2$ Resorcinoldiphenylphosphat oder Hydrochinondiphenylphosphat enthält.

**8.** Verwendung einer Formmasse nach einem der Ansprüche 1 bis 7 zur Herstellung von flammwidrigen Formkörpern, Fasern und Folien.

**9.** Flammwidrige Formkörper, Fasern und Folien, hergestellt unter Verwendung einer Formmasse nach einem der Ansprüche 1 bis 7.

**10.** Halogenfreie Flammschutzmittelkombination, enthaltend als flammhemmende Bestandteile mindestens eine halogenfreie $SO_2$-Gruppe enthaltende Phosphorverbindung der Formel I und mindestens eine halogenfreie Phosphorverbindung der Formel II.

Europäisches Patentamt

# EUROPÄISCHER RECHERCHENBERICHT

Nummer der Anmeldung
EP 97 11 0590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 096, no. 010, 31.Oktober 1996 & JP 08 151493 A (ASAHI CHEM IND CO LTD), 11.Juni 1996, * Zusammenfassung * & DATABASE WPI Week 9633 Derwent Publications Ltd., London, GB; AN 96-329564 * Zusammenfassung; Abbildungen * --- | 1,2,8,10 | C08L69/00 C08K5/523 //(C08L69/00, 55:02,51:04, 25:02) |
| A | PATENT ABSTRACTS OF JAPAN vol. 013, no. 024 (C-561), 19.Januar 1989 & JP 63 227632 A (DAIHACHI KAGAKU KOGYOSHO:KK), 21.September 1988, * Zusammenfassung * & DATABASE WPI Week 8844 Derwent Publications Ltd., London, GB; AN 88-310775 * Zusammenfassung; Abbildungen * --- | 1,2,6 | |
| | | | **RECHERCHIERTE SACHGEBIETE (Int.Cl.6)** |
| A | CHEMICAL ABSTRACTS, vol. 82, no. 6, 10.Februar 1975 Columbus, Ohio, US; abstract no. 32359, CHIMURA ET AL.: "Fire-resistant polyester compositions" XP002043465 * Zusammenfassung * & JP 49 074 733 A (SHOWA) 18.Juli 1974 --- -/-- | 1,6 | C08L C08K |

Der vorliegende Recherchenbericht wurde für alle Patentansprüche erstellt

| Recherchenort | Abschlußdatum der Recherche | Prüfer |
|---|---|---|
| DEN HAAG | 14.Oktober 1997 | Engel, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 97 11 0590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Week 9427<br>Derwent Publications Ltd., London, GB;<br>AN 94-222163<br>XP002043466<br>"polyalkylene terephthalate flame retardant composition"<br>& JP 06 157 880 A (AKZO KASHIMA) , 7.Juni 1994<br>* Zusammenfassung; Abbildungen * | 1,6 | |
| A | EP 0 466 002 A (BASF)<br>* Seite 10, Zeile 54 - Seite 11, Zeile 12; Ansprüche 1,2; Abbildung IIB2 * | 1,6 | |
| A,D | EP 0 522 397 A (BAYER)<br>* Ansprüche 1,8; Beispiele *<br>* Seite 8, Zeile 49 - Seite 9, Zeile 5 * | 1,3,4,6 | |
| A,D | EP 0 509 506 A (DAIHACHI)<br>* Seite 4, Zeile 51 - Zeile 54; Ansprüche 1,6 * | 1,6 | RECHERCHIERTE SACHGEBIETE (Int.Cl.6) |
| A | EP 0 700 968 A (CHEIL)<br>* Ansprüche 1,2 * | 1,3,4,6 | |
| A | EP 0 700 969 A (CHEIL)<br>* Ansprüche 1,2 * | 1,3,4,6 | |

Der vorliegende Recherchenbericht wurde für alle Patentansprüche erstellt

| Recherchenort | Abschlußdatum der Recherche | Prüfer |
|---|---|---|
| DEN HAAG | 14.Oktober 1997 | Engel, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)